# EUROPÄISCHE PATENTSCHRIFT

(11) **EP 2 551 659 B1**
(45) Veröffentlichungstag und Bekanntmachung des Hinweises auf die Patenterteilung: **30.09.2015**
(21) Anmeldenummer: 11193952.6
(22) Anmeldetag: 16.12.2011
(51) Int. Cl.: G01N 11/02, B29C 47/36

(54) **Vorrichtung und Verfahren zur Prüfung der Reinheit und der rheologischen Eigenschaften von Kunststoffschmelzen**
Device and method for testing the purity and rheological properties of molten plastic
Dispositif et procédé de vérification de la pureté et des propriétés rhéologiques de matières plastiques fondues

(30) Priorität: 27.07.2011 DE 102011108607; 10.08.2011 DE 102011109871
(43) Veröffentlichungstag der Anmeldung: 30.01.2013
(73) Patentinhaber: Göttfert Werkstoff-Prüfmaschinen GmbH, 74722 Buchen (DE)
(72) Erfinder: Göttfert, Axel, 74722 Buchen (DE); Sunder, Joachim, 74722 Buchen (DE)
(74) Vertreter: Patent- und Rechtsanwälte Ullrich & Naumann

(56) Entgegenhaltungen:
- WO-A1-2006/103184
- DE-C2- 10 150 796
- US-A- 5 652 376

## Beschreibung

Die vorliegende Erfindung betrifft eine Vorrichtung zum Prüfen der Reinheit und/oder der rheologischen Eigenschaften einer Kunststoffschmelze, mit einem Grundkörper, einem dem Grundkörper zugeordneten Extruder zum Plastifizieren der Kunststoffschmelze, einer Pumpe zum Fördern der Kunststoffschmelze durch einen Kanal zu mindestens einer Messzelle und zum Hindurchpressen durch die Messzelle, wobei eine Anordnung mehrerer Messzellen vorgesehen ist. Des Weiteren betrifft die Erfindung ein Verfahren zum Prüfen der Reinheit und/oder der rheologischen Eigenschaften einer Kunststoffschmelze, wobei die Vorrichtung einen Grundkörper umfasst und die Kunststoffschmelze in einem dem Grundkörper zugeordneten Extruder plastifiziert wird, mit einer Pumpe durch einen Kanal zu mindestens einer Messzelle gefördert wird und durch die Messzelle hindurchgepresst wird, wobei eine Anordnung mehrerer Messzellen vorgesehen ist.

Bei der bekannten Vorrichtung ist problematisch, dass beim Spülvorgang mit Materialwechsel - das Zweiwegeventil befindet sich in der Reinigungsstellung - der Raum zwischen Zweiwegeventil und Sieb weitestgehend abgeschlossen ist. Somit besteht bei langen Standzeiten zahlreicher Polymere die Gefahr, dass diese degradieren und dass dabei beeinträchtigende Ablagerungen entstehen. Hierdurch können Messergebnisse verfälscht werden. Ferner kann der Druck zwischen Zweiwegeventil und Sieb nur langsam abgebaut werden, so dass das in der Prüfvorrichtung befindliche Sieb aufgrund des hohen Druckniveaus erst nach einer entsprechenden Wartezeit verschoben werden kann. Für einen Siebwechsel ist somit sowohl ein hoher Zeitaufwand als auch ein hoher Kraftaufwand zum Verschieben des Siebes notwendig.

Aus DE 101 50 796 C2 ist eine gattungsbildende Vorrichtung bekannt, nämlich zum Prüfen der Reinheit und der rheologischen Eigenschaften einer Kunststoffschmelze. Die Vorrichtung umfasst einen Grundkörper, einen dem Grundkörper zugeordneten Extruder zum Plastifizieren der Kunststoffschmelze und eine Pumpe zum Fördern der Kunststoffschmelze durch einen Kanal zu mindestens einer Messzelle und zum Hindurchpressen durch die Messzelle.

Mit der bekannten Vorrichtung wird ein sogenannter Druckfiltertest durchgeführt, wobei die einzelnen Messzellen als Siebe ausgeführt sind, welche in einem Kanal angeordnet und für einen Siebwechsel verschiebbar sind. Mit einem an einem Unterteil des Körpers verschraubbaren Düsenteil werden die Siebe gegen den Körper gepresst. Zum Filterwechsel weist die bekannte Vorrichtung ein Zweiwegeventil auf, welches vor einem Wechsel rotiert, so dass nachströmende Kunststoffschmelze ins Freie abfließen kann. Nach einem Lösen des Düsenteils erfolgt der Siebwechsel. Außerdem ist bei der bekannten Vorrichtung ein manueller Stellhebel mit automatischen Stellgliedern bekannt, um einen Siebwechsel zu automatisieren.

Bei der bekannten Vorrichtung ist problematisch, dass während eines Siebwechsels der zwischen Zweiwegeventil und Messzelle verbleibende Raum weitestgehend abgeschlossen ist. Daher besteht die Gefahr eines Degradierens der Polymere, so dass Ablagerungen oder verfälschte Messergebnisse entstehen können. Aufgrund des langsamen Druckabbaus ist ein großer Kraftaufwand während des Siebwechsels erforderlich oder die Siebe können erst nach entsprechender Wartezeit verschoben werden.

Aus US 5,652,376 ist Vorrichtung und ein Verfahren zum Prüfen der rheologischen Eigenschaften einer Kunststoffschmelze beschrieben. Dabei wird Kunststoff von einem Hauptprozessstrom abgezweigt und mittels einer Pumpe zu einer Kapillaren geführt. Über ein Ablassventil kann überschüssiges Material abgeführt werden. Da das Messprinzip dieser Dokumente auf einer Messung von Druck und Gegendruck basiert, kann die Pumpe zur Messung des Gegendrucks reversiert werden. Eine Druckentlastung wird dabei gerade nicht erreicht, ganz im Gegenteil erfolgt nämlich der gezielte Aufbau eines Gegendrucks. Von einer Umkehrbarkeit einer Pumpe zur Druckentlastung des Kanals ist dort nicht die Rede. Auch zeigt diese Druckschrift keine Anordnung mehrerer Messzellen.

Der vorliegenden Erfindung liegt daher die Aufgabe zugrunde, eine Vorrichtung der eingangs genannten Art derart auszugestalten und weiterzubilden, dass der Wechsel einer Messzelle bei einfacher und sicherer Handhabbarkeit innerhalb kurzer Zeit ermöglicht ist. Ein entsprechendes Verfahren ist ebenfalls angegeben.

Erfindungsgemäß ist die voranstehende Aufgabe durch eine Vorrichtung mit den Merkmalen des Anspruchs 1 gelöst. In Bezug auf ein erfindungsgemäßes Verfahren ist die voranstehende Aufgabe durch die Merkmale des nebengeordneten Anspruchs 10 gelöst.

Danach ist die erfindungsgemäße Vorrichtung derart ausgestaltet und weitergebildet, dass die Pumpe zur Druckentlastung des Kanals und/oder der Messzelle in ihrer Förderrichtung umkehrbar ist und dass ein zwischen Extruder und Pumpe angeordnetes und mit den Kanälen verbundenes Ventil vorgesehen ist, das zum Auslass von Kunststoffschmelze öffen- oder schließbar ist.

Das erfindungsgemäße Verfahren gemäß nebengeordnetem Anspruch 10 ist dadurch gekennzeichnet, dass die Pumpe zur Druckentlastung des Kanals und/oder der Messzelle, vor und/oder während einem Wechsel der Messzelle, in ihrer Förderrichtung umgekehrt wird und dass ein zwischen Extruder und Pumpe angeordnetes und mit dem Kanal verbundenes Ventil zum Auslass von Kunststoffschmelze vor und/oder während einem Wechsel der Messzelle oder des Messzellenpakets, geöffnet wird.

In erfindungsgemäßer Weise ist erkannt worden, dass ein Wechsel einer Messzelle dann unter einfacher und sicherer Handhabung erfolgen kann, wenn der auf die Messzelle wirkende Druck reduziert wird. Dies erfolgt in erfindungsgemäßer Weise durch ein Zusammenwirken zweier Parameter, nämlich der Umkehrung der Förderrichtung der Pumpe und einem Öffnen des zwischen Extruder und Pumpe angeordneten Ventils. Hierdurch wird der im System befindliche Druck schlagartig abgebaut, so dass ein Bewegen oder Verschieben der Messzelle bereits nach wenigen Sekunden möglich ist. Dabei ist aufgrund der Tatsache, dass mehrere Messzellen vorgesehen sind, ein schneller Siebwechsel realisierbar, so dass Messungen direkt aufeinander folgen können.

Das beanspruchte Verfahren löst die zugrundeliegende Aufgabe durch die Merkmale des nebengeordneten Anspruchs 10. Danach ist das beanspruchte Verfahren derart ausgestaltet und weitergebildet, dass die Pumpe zur Druckentlastung des Kanals und/oder der Messzelle, insbesondere vor und/oder während einem Wechsel der Messzelle, in ihrer Förderrichtung umgekehrt wird und dass ein zwischen Extruder und Pumpe angeordnetes und mit den Kanälen verbundenes Ventil zum Auslass von Kunststoffschmelze vor und/oder während einem Wechsel der Messzelle oder des Messzellenpakets, geöffnet wird.

Im Konkreten können die Messzellen in einem Messzellenpaket angeordnet sein. Hierdurch wird die Handhabung dahingehend vereinfacht, dass bei einem Messzellenwechsel nicht eine Messzelle einzeln eingesetzt werden muss, sondern kann durch Bevorratung der Messzellen ein unmittelbarer Wechsel innerhalb kurzer Zeit realisiert werden. Durch das Messzellenpaket kann eine Art Magazin für die Messzellen realisiert sein. Eventuelle Rüst- oder Stillstandzeiten aufgrund eines Messzellenwechsels können reduziert werden. Hierdurch ist nahezu ein Online-Betrieb, sozusagen ein "Quasi-Online-Betrieb", ermöglicht.

Im Folgenden wird - der Einfachheit halber - der Begriff "Messzellenpaket" verwendet, wobei sich dieser synonym auch auf eine einzelne Messzelle beziehen kann. Insoweit schließt der Begriff "Messzellenpaket" sowohl eine einzelne Messzelle als auch ein Messzellenpaket ein.

Hinsichtlich eines parallelen Beschickens mehrerer Messzellen kann die Pumpe in vorteilhafter Weise mindestens zwei Ausgänge aufweisen. Die Ausgänge können dann über jeweils einen Kanal zu mindestens zwei Messzellen führen. Die Pumpe kann im Konkreten einen Eingang zur Aufnahme der vom Extruder gelieferten Kunststoffschmelze aufweisen, wobei - entsprechend der mindestens zwei Ausgänge - eine Aufteilung des Gesamtstroms erfolgt. Hierdurch können in vorteilhafter Weise mehrere Messvorgänge parallel erfolgen. Beispielsweise können hierdurch mehrere gleiche Messungen vorgenommen werden oder - bei entsprechender Bestückung der Messzelle - eine Viskositätsmessung und ein Filtertest parallel ablaufen. Hinsichtlich der Pumpe ist denkbar, dass diese als mehrstufige Pumpe ausgebildet ist.

In vorteilhafter Weise ist das Messzellenpaket mit Sieben zur Durchführung eines Filtertests, mit Kapillaren zur Durchführung rheologischer Messungen und/oder mit Durchgängen zur Spülung bestückbar. Hierdurch kann das Messzellenpaket mit unterschiedlichen Komponenten, die den gewünschten Testanforderungen entsprechen, bestückt werden. So sind mit einem Messzellenpaket unterschiedliche Tests durchführbar, kann beispielsweise mit Sieben ein Filtertest durchgeführt werden und mit Kapillaren eine rheologische Messung. Somit können in vorteilhafter Weise eine Prüfung der Reinheit und eine Prüfung der rheologischen Eigenschaften einer Kunststoffschmelze innerhalb kurzer Zeit erfolgen. Ebenfalls ist denkbar, dass das Messzellenpaket mit gleichen Komponenten bestückt ist. Somit könnten nacheinander folgende gleichartige Tests, quasi eine Messreihe, durchgeführt werden. Im Konkreten kann das Messzellenpaket dabei mindestens drei Positionen zur Aufnahme von Komponenten aufweisen. Der Begriff Komponenten bezieht sich hierbei auf Siebe, Kapillaren oder Durchgänge. Hierdurch kann ein Messzellenpaket entsprechend den individuellen Anforderungen konfiguriert werden.

Im Konkreten ist das Messzellenpaket in einer Ausnehmung des Grundkörpers verschiebbar angeordnet. Bei der Ausnehmung des Grundkörpers kann es sich um eine Nut handeln. Durch die verschiebbare Anordnung des Messzellenpakets ist eine einfache und zugleich sichere Zuführung zur Messposition ermöglicht. Diese Messposition befindet sich unterhalb des Kanals. Durch ein Verschieben kann zwischen verschiedenen Messzellen oder Messzellenpaketen umgeschaltet werden. Ist ein Messzellenpaket beispielsweise mit unterschiedlichen Komponenten bestückt, kann durch ein Verschieben zwischen den einzelnen Komponenten und somit zwischen verschiedenen Tests umgeschaltet werden. In vorteilhafter Weise ist das Messzellenpaket zur Arretierung senkrecht zur Vorschubrichtung verspannbar. Die Vorschubrichtung bezeichnet die Verschieberichtung innerhalb der Ausnehmung oder der Nut, d.h. die Längsrichtung der Ausnehmung oder Nut. Die Arretierung kann insbesondere durch einen Zylinder erfolgen, der gegen das Messzellenpaket drückt und das Messzellenpaket somit gegen eine Seitenwand der Ausnehmung oder der Nut verspannt. Hierdurch ist das Messzellenpaket sicher arretiert und ist ein Verschieben, beispielsweise während eines Messvorgangs, verhindert. Hierbei ist denkbar, dass der Zylinder mit einem Stift in eine entsprechende Ausnehmung des Messzellenpakets eingreift. Hierdurch sind der Zylinder und das Messzellenpaket im verspannten Zustand sicher miteinander gekoppelt. Bei einem Lösen der Verspannung, beispielsweise einem Entfernen des Zylinderstifts aus der entsprechenden Ausnehmung des Messzellenpakets, ist die Arretierung gelöst und kann das Messzellenpaket in der Ausnehmung oder der Nut verschoben werden. Der Zylinder kann hydraulisch, pneumatisch oder elektrisch angesteuert sein.

Für eine sichere und genaue Führung ist das Messzellenpaket auf - dem Grundkörper zugeordneten - Schienen geführt. Hierbei ist denkbar, dass die Schienen fest oder lösbar mit dem Grundkörper verbunden sind und dass das Messzellenpaket auf den Schienen oder in entsprechenden Ausnehmungen der Schienen geführt ist. Hierdurch ist eine genaue Führung ermöglicht. Bei reibungsarmer Ausgestaltung der Schienen und des Messzellenpakets ist zudem ein Verschieben mit geringem Kraftaufwand realisiert. In weiter vorteilhafter Weise weisen die Schienen eine Einlege- und/oder Entnahmeposition auf. Hierbei ist denkbar, dass an der Einlegeposition die Messzellen oder das Messzellenpaket auf die Schienen aufgelegt werden, wobei sich die Einlegeposition außerhalb des Grundkörpers befinden kann. Dies trägt zu eine sicheren Handhabung bei, kann nämlich das Messzellenpaket einfach auf die Schienen aufgesetzt werden. Da in diesem Bereich weitestgehend Umgebungstemperatur herrscht, ist die Verletzungsgefahr aufgrund von Verbrennen reduziert. Dies ist ebenfalls bei einer Entnahmeposition denkbar, die sich außerhalb des Grundkörpers befinden kann. Sollte es im Inneren des Grundkörpers zu einer Erwärmung oberhalb der Umgebungstemperatur kommen, kann an der Entnahmeposition vor einem Entnehmen auch ein Abkühlen des Messzellenpakets erfolgen. Hierdurch ist eine Verletzungsgefahr hinsichtlich Verbrennungen aufgrund hoher Temperatur nochmals reduziert. Im Konkreten könnte die Verschiebung des Messzellenpakets mechanisch erfolgen. Dies könnte über einen in Vorschubrichtung des Messzellenpakets bewegbaren Schieber realisiert sein. Durch den Schieber könnte somit ein automatisches Verschieben und folglich ein automatisches Messzellenwechselsystem realisiert sein. Durch das Verschieben wird zwischen verschiedenen Messzellen oder Messzellenpaketen umgeschaltet, ohne dass eine manuelle Betätigung eines Bedieners erfolgen muss. Durch das automatische Weiterschieben wird eine Fehlbedienung weitestgehend vermieden und wird zugleich die Verletzungsgefahr verringert. Ferner ist durch die automatische Verschiebung ein besonders präzises Positionieren der Messzellenpakete an der Messposition innerhalb des Grundkörpers ermöglicht.

Im Hinblick auf einen druckdichten Abschluss wird das Messzellenpaket durch einen Hebel gegen den Grundkörper gedrückt. Der Hebel ist dabei mit dem Grundkörper über ein Gewinde gekoppelt. Hierdurch ist auf einfache Weise eine sichere Führung des Hebels realisiert und kann zugleich durch ein Verdrehen des Hebels auf das Messzellenpaket eine Kraft aufgebracht werden. Der Kontakt zwischen Hebel und Messzellenpaket kann unmittelbar oder durch ein zwischen Messzellenpaket und Hebel befindliches Element, beispielsweise einen Anpressring realisiert sein. Hierbei ist denkbar, dass das Element oder der Anpressring zur Vermeidung einer Beschädigung am Messzellenpaket aus einem Material mit geringerer Härte oder günstigen Reibungseigenschaften besteht. Ferner ist denkbar, dass das Element oder der Anpressring zur Vermeidung eines Wärmeverlusts über den Hebel als thermische Isolation dienen, nämlich durch Ausbildung mit bestimmten Materialien oder Materialanteilen, beispielsweise Kunststoff, Keramik oder ähnliches. In Bezug auf die Ansteuerung des Hebels ist eine manuelle Ansteuerung oder ein manueller Betrieb denkbar. Ferner ist denkbar, dass die Ansteuerung über eine elektrisch oder pneumatisch ansteuerbare Zahnstange und eine damit korrespondierende Verzahnung realisiert ist. Die Verzahnung ist dabei am Hebel ausgebildet und gelangt mit der Zahnstange in Eingriff. Durch eine translatorische Bewegung der Zahnstange wird eine Drehbewegung des Hebels erzeugt, wodurch die Verspannung des Messzellenpakets hergestellt oder gelöst werden kann. Hierbei ist denkbar, dass neben der mit dem Hebel korrespondierenden Zahnstange eine weitere Kopplung realisiert ist, beispielsweise durch einen - in einer am Hebel ausgebildeten Längsnut - verschiebbaren Stift. Der Stift kann dabei mit dem Grundkörper oder mit einem etwaigen Gestell der Vorrichtung gekoppelt sein. Ferner ist denkbar, dass der Bereich des Hebels, der mit der Zahnstange in Eingriff ist, als teilweises oder - je nach Verstellbereich - als vollständiges Zahnrad ausgebildet ist.

Im Konkreten könnten Druck- und/oder Temperatursensoren vorgesehen sein. Neben einer Überwachung der Vorrichtung ist hierdurch auch eine Aufnahme von Daten durchführbar. Die Druck- und/oder Temperatursensoren sind dem Kanal zugeordnet. Es ist ein Ventil vorgesehen, das zum Auslass von Kunststoffschmelze offen- oder schließbar ist. Dieses Ventil ist zwischen Extruder und Pumpe angeordnet. Sollte kein druckgesteuerter Extruder zur Verfügung stehen, kann das Ventil vor und während dem Wechselvorgang geöffnet werden. Dies trägt zu einem Druckabbau vor und/oder während dem Wechselvorgang bei. Insbesondere wird der Druck zwischen Extruder und Pumpe reduziert. Zurückgeförderte Kunststoffschmelze oder aus dem Extruder austretende Kunststoffschmelze kann somit ins Freie abgeführt werden.

Im Konkreten könnte der Grundkörper zum Aufwärmen eines Messzellenpakets vor einem Messvorgang eine Heizeinrichtung aufweisen. Hierdurch wird der Temperaturunterschied zwischen Messzellenpaket und auftreffender Kunststoffschmelze reduziert. Ein partielles Abkühlen der Kunststoffschmelze am Messzellenpaket wird somit weitestgehend verhindert.

Das Verfahren gemäß Anspruch 10 findet vorzugsweise bei einer erfindungsgemäßen Vorrichtung Anwendung. Dabei ist für das Verfahren von besonderer Bedeutung, dass die Pumpe zur Druckentlastung des Kanals und/oder der Messzelle, insbesondere vor- und/oder während einem Wechsel der Messzelle, in ihrer Förderrichtung umgekehrt wird.

Bereits zuvor ist erwähnt worden, dass hinsichtlich der Anordnung mehrere Messzellen in einer Anordnung vorgesehen sein können und/oder dass die Messzellen in einem Messzellenpaket angeordnet werden können. Hierdurch wird die Handhabung dahingehend vereinfacht, dass bei einem Messzellenwechsel nicht eine Messzelle einzeln eingesetzt werden muss, sondern kann durch die Bevorratung der Messzellen ein unmittelbarer Wechsel innerhalb kurzer Zeit erfolgen. Durch das Messzellenpaket kann eine Bevorratung der Messzellen in der Art eines Magazins realisiert sein. Eventuelle Rüst- oder Stillstandzeiten aufgrund eines Messzellenwechsels können reduziert werden. Hierdurch ist nahezu ein Online-Betrieb, sozusagen ein "Quasi-Online-Betrieb" ermöglicht.

In Bezug auf die erfindungsgemäße Vorrichtung ist bereits erwähnt worden, dass das Messzellenpaket mit Sieben zur Durchführung eines Filtertests, mit Kapillaren zur Durchführung rheologischer Messungen und/oder mit Durchgängen zur Spülung bestückt wird. Hierdurch ist eine individuelle Konfiguration der Messzellenpakete entsprechend den gewünschten Testanforderungen möglich. Innerhalb kurzer Zeit lassen sich somit durch einfachen Wechsel der Messzelle rheologische Messungen und Reinheitsmessungen durchführen. Ebenfalls können die Messzellenpakete beispielsweise durch alleinige Ausrüstung mit Sieben oder durch alleinige Ausrüstung mit Kapillaren zur Durchführung des Filtertests oder zur Durchführung rheologischer Messungen ausgerüstet werden. Hierdurch können gleichartige Versuche durchgeführt werden, beispielsweise in der Art einer Messreihe.

Im Konkreten könnte das Messzellenpaket in einer Ausnehmung des Grundkörpers verschiebbar angeordnet werden. Bei der Ausnehmung des Grundkörpers kann es sich um eine Nut handeln. Hierdurch ist eine einfache und sichere Führung des Messzellenpakets im Grundkörper realisiert. Durch das Verschieben des Messzellenpakets kann auf einfache Weise zwischen einzelnen Komponenten umgeschaltet werden. Der Begriff Komponenten bezieht sich im vorliegenden Fall auf Siebe, Kapillaren oder Durchgänge. Ist das Messzellenpaket mit unterschiedlichen Komponenten bestückt, so können in kurzer Zeit unterschiedliche Tests durchgeführt werden.

Im Konkreten kann ein Ventil vorgesehen sein, das zum Auslass von Kunststoffschmelze geöffnet wird. Das Ventil kann dabei zwischen Extruder und Pumpe angeordnet sein. Ferner kann das Ventil vor und/oder während einem Wechsel des Messzellenpakets geöffnet werden. Hierdurch wird, insbesondere dann, wenn kein druckgesteuerter Extruder zur Verfügung steht, eine Druckentlastung zwischen Extruder und Pumpe realisiert. Aus dem Extruder austretende Kunststoffschmelze kann somit ins Freie abfließen.

Bereits in Bezug auf die erfindungsgemäße Vorrichtung ist erwähnt worden, dass durch eine dem Grundkörper zugeordnete Heizeinrichtung das Messzellenpaket vor einem Messvorgang aufgewärmt wird. Hierdurch wird der Temperaturunterschied zwischen dem Messzellenpaket und der auftreffenden Kunststoffschmelze reduziert.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: eine schematische, teilweise geschnittene Ansicht eines bevorzugten Ausführungsbeispiels der erfindungsgemäßen Vorrichtung,
- Fig. 2: eine schematische, teilweise geschnittene Draufsicht der Vorrichtung aus Fig. 1 und
- Fig. 3: eine schematische, teilweise geschnittene Ansicht von Messzellenpaketen, die bei der Vorrichtung aus Fig. 1 einsetzbar sind.

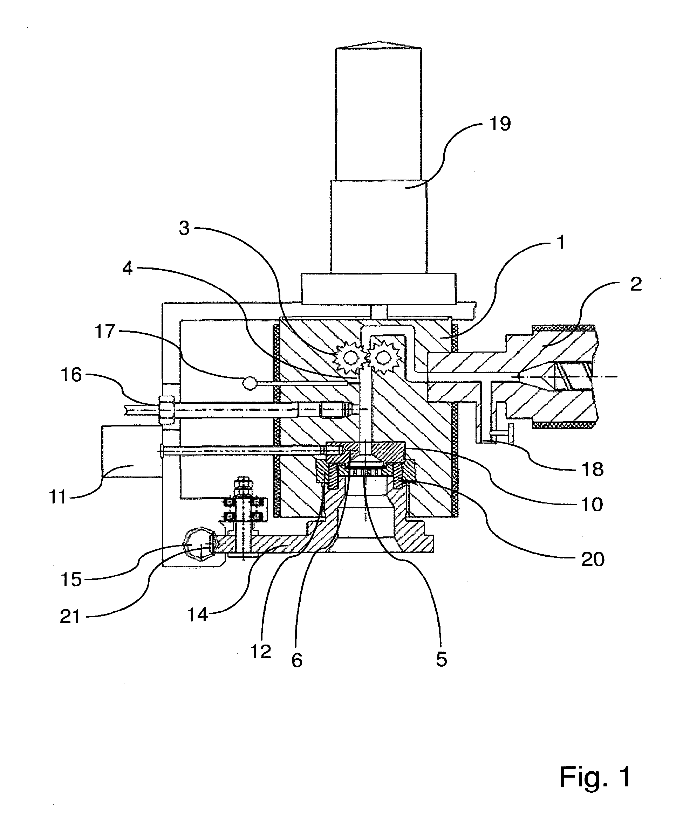

Fig. 1 zeigt eine schematische, teilweise geschnittene Ansicht eines bevorzugten Ausführungsbeispiels der erfindungsgemäßen Vorrichtung. Die Vorrichtung weist einen Grundkörper 1 auf. Dem Grundkörper 1 ist ein Extruder 2 zugeordnet. Dabei ist der Extruder 2 an den Grundkörper 1 angeflanscht. Der Extruder 2 dient zur Plastifizierung einer Kunststoffschmelze, die in den Grundkörper 1 geführt wird. Im Grundkörper 1 ist ferner eine Pumpe 3 angeordnet, die die Kunststoffschmelze durch einen Kanal 4 zu einer Messzelle 5 oder zu einem Messzellenpaket 6 fördert. Dabei wird die Kunststoffschmelze mit Druck beaufschlagt. Die Messzelle 5 ist einem Messzellenpaket 6 zugeordnet, das in einer Ausnehmung 10 oder einer Nut 10 verschiebbar angeordnet ist. Dem Kanal 4 ist ein Drucksensor 16 und ein Temperatursensor 17 zugeordnet. Hierdurch kann eine Überwachung des Grundkörpers 1 oder etwaiger stattfindender Messvorgänge erfolgen.

Das Messzellenpaket 6 ist durch einen Zylinder 11 senkrecht zur Vorschubrichtung arretierbar. Mit anderen Worten erfolgt die Arretierung des Messzellenpakets 6 senkrecht zur Längsrichtung der Ausnehmung 10 oder Nut 10. Zur Arretierung greift ein Stift in eine mit diesem korrespondierende Ausnehmung im Messzellenpaket 6 ein. Ein Verschieben des Messzellenpakets 6 ist somit verhindert. Das Messzellenpaket 6 ist auf Schienen 12, die mit dem Grundkörper 1 verbunden sind, verschiebbar geführt. Für einen druckdichten Abschluss des Messzellenpakets 6 mit dem Grundkörper 1 ist das Messzellenpaket 6 durch einen Hebel 14 gegen den Grundkörper 1 andrückbar. Hierbei ist der Hebel 14 mit dem Grundkörper 1 über ein Gewinde gekoppelt. Durch Verdrehen des Hebels 14 kann die Verspannung des Messzellenpakets 6 mit dem Grundkörper 1 hergestellt oder gelöst werden. Das Messzellenpaket 6 ist vorliegend nicht unmittelbar mit dem Hebel 14 in Kontakt, sondern befindet sich zwischen Hebel 14 und Messzellenpaket 6 ein Anpressring 20. Die Betätigung des Hebels 14 erfolgt durch eine pneumatisch ansteuerbare Zahnstange 15 und eine - am Hebel 14 ausgebildete - mit der Zahnstange 15 korrespondierende Verzahnung 21. Durch eine translatorische Bewegung der Zahnstange 15 wird eine Rotation des Hebels 14 erzeugt, wodurch die Verspannung des Messzellenpakets 6 mit dem Grundkörper 1 hergestellt oder gelöst werden kann. Neben der Kopplung der Zahnstange 15 mit der korrespondierenden Verzahnung 21 ist der Hebel 14 ferner mit einem in einer Längsnut am Hebel 14 verschiebbaren Stift geführt.

Die Pumpe 3 verfügt über einen Pumpenantrieb 19. Am Extruder 2 ist ein Ventil 18 angeordnet, welches öffen- und schließbar ist. Durch das Ventil 18 kann bei geöffnetem Zustand Kunststoffschmelze ins Freie abfließen.

Der Wechsel einer Messzelle 5 oder eines Messzellenpakets 6 läuft wie folgt ab:

Während einem Messvorgang plastifiziert der Extruder 2 Kunststoffschmelze, die durch die Pumpe 3 durch den Kanal 4 zur Messzelle 5 bzw. zum Messzellenpaket 6 gefördert wird. Hierbei wird die Kunststoffschmelze mit Druck beaufschlagt. Das Ventil 18 ist in diesem Zustand geschlossen. Der Zylinder 11 arretiert das Messzellenpaket 6 in der Nut 10. Bei einem Wechsel des Messzellenpakets 6 wird die Förderrichtung der Pumpe 3 umgekehrt. Mit anderen Worten reversiert die Pumpe 3. Dies führt zu sofortigem Druckabbau im Kanal 4 bzw. vor dem Messzellenpaket 6. Sollte der Extruder 2 weiter Kunststoffschmelze produzieren, so kann zur Vermeidung eines Staus im Kanal 4 das Ventil 18 geöffnet werden, so dass die Kunststoffschmelze ins Freie abfließen kann. Die Zahnstange 15 wird bewegt, so dass die Verspannung zwischen Messzellenpaket 6 und Grundkörper 1 gelöst wird. Der Zylinder 11 löst die Arretierung des Messzellenpakets 6. Das Messzellenpaket 6 kann somit bereits innerhalb weniger Sekunden verschoben werden, bis die nächste Messzelle 5 oder das nächste Messzellenpaket 6 sich unterhalb des Kanals 4, d. h. in der Messposition befindet. Durch den Zylinder 11 wird die Arretierung des Messzellenpakets 6 hergestellt, und durch Bewegung der Zahnstange 15 wird der Hebel 14 verdreht, so dass das Messzellenpaket 6 im Grundkörper 1 verspannt wird. Die Förderrichtung der Pumpe 3 wird wieder in die ursprüngliche Förderrichtung - Fördern zur Messzelle 5 oder zum Messzellenpaket 6 hin - umgekehrt und das Ventil 18 wird geschlossen. Der Messvorgang kann mit der neuen Messzelle 5 oder dem neuen Messzellenpaket 6 fortgeführt werden.

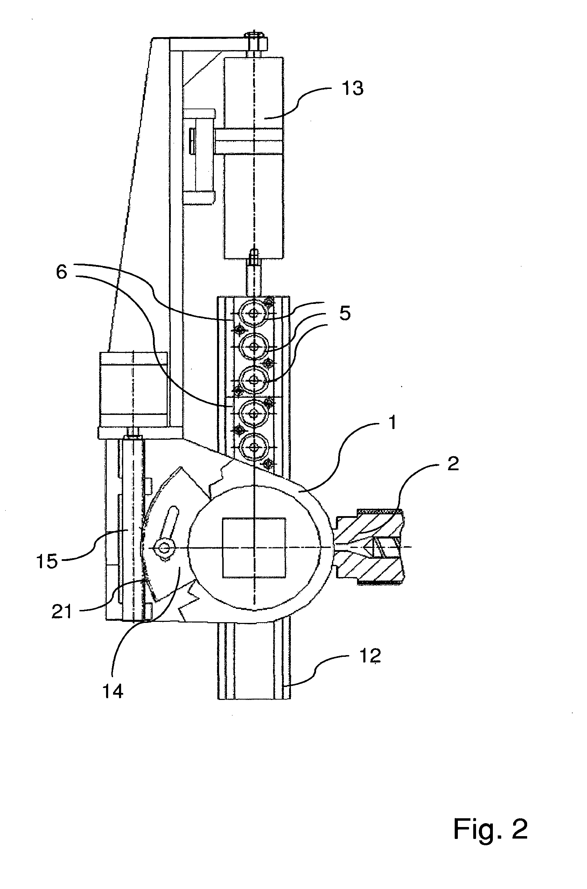

Fig. 2 zeigt eine schematische, teilweise geschnittene Draufsicht der Vorrichtung aus Fig. 1. Die Zahnstange 15 wird durch einen pneumatischen Zylinder 22 angesteuert, wodurch über die Zahnstange 15 und Verzahnung 21 der Hebel 14 betätigt bzw. verschwenkt werden kann. Über den mechanisch angesteuerten Schieber 13 können die auf den Schienen 12 befindlichen Messzellenpakete 6 verschoben werden. Der in Fig. 2 oberhalb des Grundkörpers 1 dargestellte Abschnitt der Schienen 12 stellt die Einlegeposition und der unterhalb des Grundkörpers 1 dargestellte Bereich die Entnahmeposition der Schienen 12 dar. Ebenfalls zu erkennen ist, dass die Messzellenpakete 6 drei Messzellen 5 aufweisen. Durch ein Verschieben der auf der Schiene 12 befindlichen Messzellenpakete 6 kann zwischen einzelnen Messzellen 5 weitergeschaltet oder umgeschaltet werden.

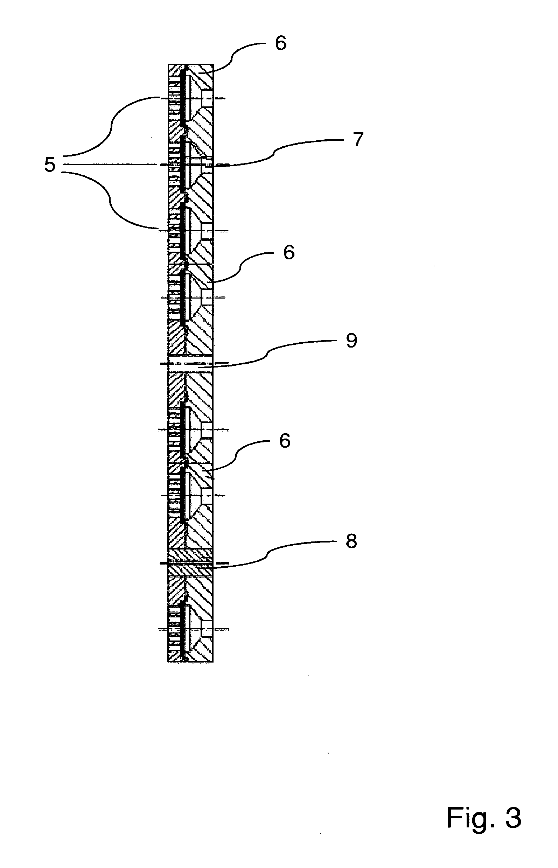

In Fig. 3 ist eine schematische, teilweise geschnittene Ansicht von Messzellenpaketen 6 gezeigt, die bei der Vorrichtung aus Fig. 1 verwendet werden können. Die Messzellenpakete 6 weisen jeweils drei Messzellen 5 auf. Diese sind aus Gründen der Übersichtlichkeit nur einmal mit Bezugszeichen versehen. Das - in Fig. 3 - obere Messzellenpaket 6 weist in der mittleren Position ein Sieb 7 zur Durchführung eines Filtertests auf. Das mittlere Messzellenpaket 6 weist einen freien Durchgang 9 für einen Spülvorgang auf. Das untere Messzellenpaket 6 weist an seiner mittleren Position Kapillaren 8 zur Durchführung rheologischer Messungen auf.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass das voranstehend beschriebene Ausführungsbeispiel der erfindungsgemäßen Vorrichtung lediglich zur Erörterung der beanspruchten Lehre dient, diese jedoch nicht auf die Ausführungsbeispiele einschränkt.

### Bezugszeichenliste

- 1: Grundkörper
- 2: Extruder
- 3: Pumpe
- 4: Kanal
- 5: Messzelle
- 6: Messzellenpaket
- 7: Sieb
- 8: Kapillare
- 9: Durchgang
- 10: Ausnehmung, Nut
- 11: Zylinder
- 12: Schiene
- 13: Schieber
- 14: Hebel
- 15: Zahnstange
- 16: Drucksensor
- 17: Temperatursensor
- 18: Ventil
- 19: Pumpenantrieb
- 20: Anpressring
- 21: Verzahnung
- 22: Zylinder

## Patentansprüche

1. Vorrichtung zum Prüfen der Reinheit und/oder der rheologischen Eigenschaften einer Kunststoffschmelze, mit einem Grundkörper (1), einem dem Grundkörper (1) zugeordneten Extruder (2) zum Plastifizieren der Kunststoffschmelze, einer Pumpe (3) zum Fördern der Kunststoffschmelze durch einen Kanal (4) zu mindestens einer Messzelle (5) und zum Hindurchpressen durch die Messzelle (5), wobei eine Anordnung mehrerer Messzellen (5) vorgesehen ist, **dadurch gekennzeichnet, dass** die Pumpe (3) zur Druckentlastung des Kanals (4) und/oder der Messzelle (5) in ihrer Förderrichtung umkehrbar ist und dass ein zwischen Extruder (2) und Pumpe (3) angeordnetes und mit dem Kanal (4) verbundenes Ventil (18) vorgesehen ist, das zum Auslass von Kunststoffschmelze öffen- oder schließbar ist.

2. Vorrichtung nach Anspruch 1, **dadurch gekennzeichnet, dass** die Messzellen (5) in einem Messzellenpaket (6) angeordnet sind.

3. Vorrichtung nach Anspruch 1 oder 2, **dadurch gekennzeichnet, dass** die Pumpe (3) zum parallelen Beschicken mehrerer Messzellen (5) mindestens zwei Ausgänge aufweist, die über jeweils einen Kanal (4) zu mindestens zwei Messzellen (5) führen.

4. Vorrichtung nach einem der Ansprüche 1 bis 3, **dadurch gekennzeichnet, dass** die Messzelle (5) oder das Messzellenpaket (6) mit Sieben (7) zur Durchführung eines Filtertests, Kapillaren (8) zur Durchführung rheologischer Messungen und/oder mit Durchgängen (9) zur Spülung bestückbar ist, wobei vorzugsweise das Messzellenpaket (6) mindestens drei Positionen zur Aufnahme von Komponenten (7, 8, 9) aufweist.

5. Vorrichtung nach einem der Ansprüche 1 bis 4, **dadurch gekennzeichnet, dass** die Messzelle (5) oder das Messzellenpaket (6) in einer Ausnehmung (10) des Grundkörpers (1), insbesondere in einer Nut (10), verschiebbar angeordnet ist, und/oder dass die Messzelle (5) oder das Messzellenpaket (6) zur Arretierung senkrecht zur Vorschubrichtung, insbesondere durch einen Zylinder (11), verspannbar ist.

6. Vorrichtung nach einem der Ansprüche 1 bis 5, **dadurch gekennzeichnet, dass** die Messzelle (5) oder das Messzellenpaket (6) auf dem Grundkörper (1) zugeordneten Schienen (12) geführt ist, wobei vorzugsweise die Schienen (12) eine Einlege- und/oder Entnahmeposition aufweisen, und/oder dass die Verschiebung der Messzelle (5) oder des Messzellenpakets (6) mechanisch erfolgt, insbesondere über einen in Vorschubrichtung der Messzelle (5) oder des Messzellenpakets (6) bewegbaren Schieber (13).

7. Vorrichtung nach einem der Ansprüche 1 bis 6, **dadurch gekennzeichnet, dass** die Messzelle (5) oder das Messzellenpaket (6) für einen druckdichten Abschluss durch einen - mit dem Grundkörper (1) über ein Gewinde gekoppelten - Hebel (14) gegen den Grundkörper (1) gedrückt wird, wobei vorzugsweise die Betätigung des Hebels (14) durch eine manuell, elektrisch oder pneumatisch ansteuerbare Zahnstange (15) und eine damit korrespondierende Verzahnung (21) realisiert ist.

8. Vorrichtung nach einem der Ansprüche 1 bis 7, **dadurch gekennzeichnet, dass** Druck- und/oder Temperatursensoren (16, 17) vorgesehen sind, die insbesondere dem Kanal (4) zugeordnet sind.

9. Vorrichtung nach einem der Ansprüche 1 bis 8, **dadurch gekennzeichnet, dass** der Grundkörper (1) zum Aufwärmen der Messzelle (5) oder des Messzellenpakets (5) vor einem Messvorgang eine Heizeinrichtung aufweist.

10. Verfahren zum Prüfen der Reinheit und/oder der rheologischen Eigenschaften einer Kunststoffschmelze, wobei die Vorrichtung einen Grundkörper (1) umfasst und die Kunststoffschmelze in einem dem Grundkörper (1) zugeordneten Extruder (2) plastifiziert wird, mit einer Pumpe (3) durch einen Kanal (4) zu mindestens einer Messzelle (5) gefördert wird und durch die Messzelle (5) hindurchgepresst wird, wobei eine Anordnung mehrerer Messzellen (5) vorgesehen ist, insbesondere zur Anwendung bei einer Vorrichtung nach einem der Ansprüche 1 bis 9,
**dadurch gekennzeichnet, dass** die Pumpe (3) zur Druckentlastung des Kanals (4) und/oder der Messzelle (5), vor und/oder während einem Wechsel der Messzelle (5), in ihrer Förderrichtung umgekehrt wird und dass ein zwischen Extruder (2) und Pumpe (3) angeordnetes und mit dem Kanal (4) verbundenes Ventil (18) zum Auslass von Kunststoffschmelze vor und/oder während einem Wechsel der Messzelle (5) oder des Messzellenpakets (6), geöffnet wird.

11. Verfahren nach Anspruch 10, **dadurch gekennzeichnet, dass** die Messzellen (5) in einem Messzellenpaket (6) angeordnet werden.

12. Verfahren nach Anspruch 10 oder 11, **dadurch gekennzeichnet, dass** die Messzelle (5) oder das Messzellenpaket (6) mit Sieben (7) zur Durchführung eines Filtertests, Kapillaren (8) zur Durchführung rheologischer Messungen und/oder mit Durchgängen (9) zur Spülung bestückt wird.

13. Verfahren nach einem der Ansprüche 10 bis 12, **dadurch gekennzeichnet, dass** die Messzelle (5) oder das Messzellenpaket (6) in einer Ausnehmung (10) des Grundkörpers (1), insbesondere in einer Nut (10), verschiebbar angeordnet wird und/oder dass durch Verschieben der Messzelle (5) oder des Messzellenpakets (6) zwischen Komponenten (7, 8, 9) umgeschaltet wird.

14. Verfahren nach einem der Ansprüche 10 bis 13, **dadurch gekennzeichnet, dass** durch eine dem Grundkörper (1) zugeordnete Heizeinrichtung die Messzelle (5) oder das Messzellenpaket (6) vor einem Messvorgang aufgewärmt wird.

## Claims

1. Device for verifying the purity and/or the rheological properties of a plastics melt, having a base member (1), an extruder (2) which is associated with the base member (1) for plasticising the plastics melt, a pump (3) for conveying the plastics melt through a channel (4) to at least one measurement cell (5) and for pressing it through the measurement cell (5), wherein an arrangement of a plurality of measurement cells (5) is provided,
**characterised in that**
the pump (3) can be reversed in terms of the conveying direction thereof for pressure relief of the channel (4) and/or the measurement cell (5) and **in that** there is provided a valve (18) which is arranged between the extruder (2) and the pump (3) and which is connected to the channel (4) and which can be opened or closed in order to discharge plastics melt.

2. Device according to claim 1, **characterised in that** the measurement cells (5) are arranged in a measurement cell assembly (6).

3. Device according to claim 1 or claim 2, **characterised in that** the pump (3) for the parallel charging of a plurality of measurement cells (5) has at least two outlets which lead via a channel (4) to at least two measurement cells (5), respectively.

4. Device according to any one of claims 1 to 3, **characterised in that** the measurement cell (5) or the measurement cell assembly (6) can be fitted with sieves (7) for carrying out a filter test, capillaries (8) for carrying out rheological measurements and/or passages (9) for flushing, wherein the measurement cell assembly (6) preferably has at least three positions for receiving components (7, 8, 9).

5. Device according to any one of claims 1 to 4, **characterised in that** the measurement cell (5) or the measurement cell assembly (6) is displaceably arranged in a recess (10) of the base member (1), in particular in a groove (10), and/or **in that** the measurement cell (5) or the measurement cell assembly (6) for securing can be clamped perpendicularly to the feed direction, in particular by means of a cylinder (11).

6. Device according to any one of claims 1 to 5, **characterised in that** the measurement cell (5) or the measurement cell assembly (6) is guided on rails which are associated with the base member (1), wherein the rails (12) preferably have an insertion and/or removal position, and/or **in that** the displacement of the measurement cell (5) or the measurement cell assembly (6) is carried out mechanically, in particular by means of a sliding member (13) which can be moved in the feed direction of the measurement cell (5) or the measurement cell assembly (6).

7. Device according to any one of claims 1 to 6, **characterised in that** the measurement cell (5) or the measurement cell assembly (6) for a pressure-tight closure by means of a lever (14) - which is coupled to the base member (1) by means of a thread - is pressed against the base member (1), wherein the actuation of the lever (14) is preferably produced by means of a toothed rack (15) which can be controlled in a manual, electrical or pneumatic manner and a corresponding tooth arrangement (21).

8. Device according to any one of claims 1 to 7, **characterised in that** there are provided pressure and/or temperature sensors (16, 17) which are in particular associated with the channel (4).

9. Device according to any one of claims 1 to 8, **characterised in that** the base member (1) has a heating device for heating the measurement cell (5) or the measurement cell assembly (5) prior to a measurement operation.

10. Method for verifying the purity and/or the rheological properties of a plastics melt, wherein the device comprises a base member (1) and the plastics melt is plasticised in an extruder (2) which is associated with the base member (1), is conveyed by means of a pump (3) through a channel (4) to at least one measurement cell (5) and is pressed through the measurement cell (5), wherein an arrangement of a plurality of measurement cells (5) is provided, in particular for use in a device according to any one of claims 1 to 9,
**characterised in that** the pump (3) for pressure relief of the channel (4) and/or the measurement cell (5) is reversed in terms of the conveying direction thereof before and/or during a change of the measurement cell (5), and **in that** a valve (18) which is arranged between the extruder (2) and the pump (3) and which is connected to the channel (4) is opened in order to discharge plastics melt before and/or during a change of the measurement cell (5) or the measurement cell assembly (6).

11. Method according to claim 10, **characterised in that** the measurement cells (5) are arranged in a measurement cell assembly (6).

12. Method according to claim 10 or 11, **characterised in that** the measurement cell (5) or the measurement cell assembly (6) is fitted with sieves (7) for carrying out a filter test, capillaries (8) for carrying out rheological measurements and/or passages (9) for flushing.

13. Method according to any one of claims 10 to 12, **characterised in that** the measurement cell (5) or the measurement cell assembly (6) is displaceably arranged in a recess (10) of the base member (1), in particular in a groove (10) and/or **in that**, by displacing the measurement cell (5) or the measurement cell assembly (6), switching is carried out between components (7, 8, 9).

14. Method according to any one of claims 10 to 13, **characterised in that** the measurement cell (5) or the measurement cell assembly (6) is heated prior to a measurement operation by a heating device which is associated with the base member (1).

## Revendications

1. Dispositif permettant de contrôler la pureté et/ou les propriétés rhéologiques d'une matière plastique en fusion, comportant un corps de base (1), une extrudeuse (2), associée au corps de base (1) et destinées à plastifier la matière plastique en fusion, une pompe (3) destinée à transporter la matière plastique en fusion à travers un canal (4) vers au moins une cellule de mesure (5) et à la presser à travers ladite cellule de mesure (5), un ensemble de plusieurs cellules de mesure (5) étant prévu,
**caractérisé en ce que** le sens de transport de la pompe (3) peut être inversé pour une décharge de pression dans le canal (4) et les cellules de mesure (5) et **en ce qu'**il est prévu une vanne (18) disposée entre l'extrudeuse (2) et la pompe (3) et reliée au canal (4), laquelle peut être amenée en position ouverte ou fermée pour laisser sortir la matière plastique en fusion.

2. Dispositif selon la revendication 1, **caractérisé en ce que** les cellules de mesure (5) sont disposées en un bloc de cellules de mesure (6).

3. Dispositif selon la revendication 1 ou 2, **caractérisé en ce que** la pompe (3), en vue du chargement parallèle de plusieurs cellules de mesure (5), comporte au moins deux sorties qui mènent chacune vers au moins deux cellules de mesure (5) en passant respectivement dans un canal (4).

4. Dispositif selon l'une quelconque des revendications 1 à 3, **caractérisé en ce que** la cellule de mesure (5) ou le bloc de cellules de mesure (6) peuvent être équipés de tamis (7) pour la mise en oeuvre d'un test de filtrage, de capillaires (8) pour la mise en oeuvre de mesures rhéologiques et/ou de passages (9) pour le rinçage, de préférence le bloc de cellules de mesure (6) comportant au moins trois positions destinées à recevoir les composants (7, 8, 9).

5. Dispositif selon l'une quelconque des revendications 1 à 4, **caractérisé en ce que** la cellule de mesure (5) ou le bloc de cellules de mesure (6) sont disposés de manière mobile dans un évidement (10) du corps de base (1), en particulier dans une rainure (10), et/ou **en ce que** la cellule de mesure (5) ou le bloc de cellules de mesure (6) en vue de leur immobilisation perpendiculairement au sens d'avance, peuvent être bloqués en particulier par un cylindre (11).

6. Dispositif selon l'une quelconque des revendications 1 à 5, **caractérisé en ce que** la cellule de mesure (5) ou le bloc de cellules de mesure (6) sont logés sur des rails (12) associés au corps de base (1), lesdits rails (12) comportant de préférence une position de pose et/ou de prélèvement, et/ou **en ce que** le déplacement de la cellule de mesure (5) ou du bloc de cellules de mesure (6) est assuré mécaniquement, en particulier par l'intermédiaire d'un coulisseau (13) mobile dans le sens d'avance de la cellule de mesure (5) ou du bloc de cellules de mesure (6).

7. Dispositif selon l'une quelconque des revendications 1 à 6, **caractérisé en ce que** la cellule de mesure (5) ou le bloc de cellules de mesure (6), en vue d'une fermeture étanche à la pression, sont poussés contre le corps de base (1) par un levier (14) - couplé au corps de base (1) par un filetage -, la manoeuvre du levier (14) étant réalisée de préférence au moyen d'une crémaillère (15) à commande manuelle, électrique ou pneumatique et d'une denture (21) correspondant à celle-ci.

8. Dispositif selon l'une quelconque des revendications 1 à 7, **caractérisé en ce qu'**il est prévu des capteurs de pression et/ou de température (16, 17) qui sont associés en particulier au canal (4).

9. Dispositif selon l'une quelconque des revendications 1 à 8, **caractérisé en ce que** le corps de base (1) comporte un dispositif de chauffage pour chauffer la cellule de mesure (5) ou le bloc de cellules de mesure (6) avant un processus de mesure.

10. Procédé permettant de contrôler la pureté et/ou les propriétés rhéologiques d'une matière plastique en fusion, le dispositif comportant un corps de base (1) et la matière plastique en fusion étant plastifiée dans une extrudeuse (2) associée au corps de base (1), étant transportée par une pompe (3) à travers un canal (4) vers au moins une cellule de mesure (5), un ensemble de plusieurs cellules de mesure (5) étant prévu, à appliquer en particulier avec un dispositif selon l'une quelconque des revendications 1 à 9,
**caractérisé en ce que** le sens de transport de la pompe (3) peut être inversé pour une décharge de pression dans le canal (4) et les cellules de mesure (5) avant et/ou pendant un changement de cellule de mesure (5), et **en ce qu'**une vanne (18), disposée entre l'extrudeuse (2) et la pompe (3) et reliée au canal (4), est amenée en position ouverte pour laisser sortir la matière plastique en fusion avant et/ou pendant un changement de cellule de mesure (5) ou du bloc de cellules de mesure (6).

11. Procédé selon la revendication 10, **caractérisé en ce que** les cellules de mesure (5) sont disposées en un bloc de cellules de mesure (6).

12. Procédé selon la revendication 10 ou 11, **caractérisé en ce que** la cellule de mesure (5) ou le bloc de cellules de mesure (6) peuvent être équipés de tamis (7) pour la mise en oeuvre d'un test de filtrage, de capillaires (8) pour la mise en oeuvre de mesures rhéologiques et/ou de passages (9) pour le rinçage.

13. Procédé selon l'une quelconque des revendications 10 à 12, **caractérisé en ce que** la cellule de mesure (5) ou le bloc de cellules de mesure (6) sont disposés de manière mobile dans un évidement (10) du corps de base (1), en particulier dans une rainure (10), et/ou **en ce que** le déplacement de la cellule de mesure (5) ou du bloc de cellules de mesure (6) permet de commuter entre les composants (7, 8, 9).

14. Procédé selon l'une quelconque des revendications 10 à 13, **caractérisé en ce que** la cellule de mesure (5) ou le bloc de cellules de mesure (6) sont chauffés avant un processus de mesure par un dispositif de chauffage associé au corps de base (1).
